# EUROPEAN PATENT APPLICATION

(11) **EP 3 756 752 A1**
(43) Date of publication of application: **30.12.2020**
(21) Application number: 18836225.5
(22) Date of filing: 20.02.2018
(51) Int. Cl.: B01D 53/86, B01D 53/62, B01D 53/90, F23G 7/06

(54) **EXHAUST GAS PROCESSING APPARATUS AND EXHAUST GAS PROCESSING METHOD**

(71) Applicant: MITSUBISHI HEAVY INDUSTRIES, LTD., Minato-ku Tokyo 108-8215 (JP)
(72) Inventor: TANAKA, Hiroshi, Minato-ku Tokyo 1088215 (JP); HIRATA, Takuya, Minato-ku Tokyo 1088215 (JP); KAMIJO, Takashi, Minato-ku Tokyo 1088215 (JP); TSUJIUCHI, Tatsuya, Minato-ku Tokyo 1088215 (JP)
(74) Representative: Studio Torta S.p.A.
(86) International application number: PCT/JP2018/005944
(87) International publication number: WO 2019/162991

(57) **Abstract**

An exhaust gas treatment device (1) includes an exhaust gas line (L₁₁) through which a combustion exhaust gas (G₁₁) discharged from a power generation facility (10) flows, a waste heat recovery boiler (11) recovering waste heat of the combustion exhaust gas (G₁₁), a branch exhaust gas line (L_{11B}) provided to be connected between a front stage and a downstream stage of the waste heat recovery boiler (11) on a main exhaust gas line (L_{11A}), a nitrogen oxide removal unit (120) removing nitrogen oxide in an integrated combustion exhaust gas (G₂₁) into which a combustion exhaust gas (G_{11A}) flowing through the main exhaust gas line (L_{11A}) and a combustion exhaust gas (G_{11B}) flowing through the branch exhaust gas line (L_{11B}) are integrated, an integrated waste heat recovery boiler (12) recovering waste heat of the integrated combustion exhaust gas (G₂₁) from which nitrogen oxide has been removed, and a CO₂ recovery unit (13) recovering CO₂ in the integrated combustion exhaust gas (G₂₁) from which the waste heat has been recovered by the integrated waste heat recovery boiler (12).

## Description

### Technical Field

The present invention relates to an exhaust gas treatment device and an exhaust gas treatment method, and for example, relates to an exhaust gas treatment device and an exhaust gas treatment method for treating combustion exhaust gas exhausted from a power generation facility or the like.

### Background Art

In the past, there has been proposed an exhaust gas treatment device including a plurality of exhaust gas flow paths which are connected to a plurality of gas turbines and includes a waste heat recovery boiler recovering waste heat of combustion exhaust gas discharged from the gas turbines (see Patent Document 1, for example). In the exhaust gas treatment device, the waste heat of the combustion exhaust gas discharged from each gas turbine is recovered by the waste heat recovery boiler provided to each exhaust gas flow path. Then, the combustion exhaust gas, from which the waste heat has been recovered, in each of the exhaust gas flow paths is integrated into an integrated combustion exhaust gas, and thereafter, carbon dioxide (CO₂) in the integrated combustion exhaust gas is recovered by a CO₂ absorbing liquid in a CO₂ recovery device.

### Citation List

### Patent Documents

Patent Document 1: JP 5291449 B

### Summary of Invention

### Problem to be Solved by the Invention

Here, in the exhaust gas treatment device, a component derived from nitrogen oxide contained in the combustion exhaust gas (for example, nitrogen dioxide (NO₂)) accumulates as an accumulated component in the CO₂ absorbing liquid, and therefore, it is preferable to provide a nitrogen oxide removal device for removing nitrogen oxide in the exhaust gas on a front stage of the carbon dioxide recovery device. The nitrogen oxide removal device needs to be provided on a front stage of a waste heat recovery device in order to efficiently remove nitrogen oxide, because a nitrogen oxide removal efficiency decreases when a temperature of the exhaust gas decreases to lower than a predetermined temperature (for example, less than 300°C). However, in the exhaust gas treatment device including a plurality of exhaust gas flow paths connected to a plurality of gas turbines, the nitrogen oxide removal device needs to be provided on a front stage of the waste heat recovery boiler of each exhaust gas flow path, and the exhaust gas treatment device may increase in size, thus increasing facility cost.

The present invention has an object to provide an exhaust gas treatment device and an exhaust gas treatment method capable of reducing an accumulation amount of the nitrogen oxide-derived component in the CO₂ absorbing liquid and capable of reducing the increase in the facility cost.

### Solution to Problem

An exhaust gas treatment device according to the present invention includes: a first exhaust gas flow path through which a first combustion exhaust gas discharged from a power generation facility flows; a waste heat recovery unit provided to the first exhaust gas flow path and recovers waste heat of the first combustion exhaust gas; a second exhaust gas flow path branched from the first exhaust gas flow path and provided between a front stage and downstream stage of the waste heat recovery unit on the first exhaust gas flow path, in which at least a part of the first combustion exhaust gas flowing through the first exhaust gas flow path flows, as a second combustion exhaust gas, through the second exhaust gas flow path; a nitrogen oxide removal unit configured to remove nitrogen oxide in an integrated combustion exhaust gas into which the first combustion exhaust gas and the second combustion exhaust gas are integrated, the first combustion exhaust gas flowing through the first exhaust gas flow path with the waste heat of the first combustion exhaust gas having been recovered by the waste heat recovery unit, and the second combustion exhaust gas flowing through the second exhaust gas flow path with a temperature of the second combustion exhaust gas being higher relative to the first combustion exhaust gas; an integrated waste heat recovery unit configured to recover waste heat of the integrated combustion exhaust gas with the nitrogen oxide having been removed by the nitrogen oxide removal unit; and a CO₂ recovery unit configured to recover CO₂ in the integrated combustion exhaust gas by a CO₂ absorbing liquid with the waste heat of the integrated combustion exhaust gas having been recovered by the integrated waste heat recovery unit.

According to this configuration, the combustion exhaust gas discharged from the power generation facility is branched into the first exhaust gas flow path and the second exhaust gas flow path, and thereafter, the waste heat of the first combustion exhaust gas flowing through the first exhaust gas flow path is recovered by the waste heat recovery unit, while the first combustion exhaust gas is integrated with the second combustion exhaust gas flowing through the second exhaust gas flow path in a state of the temperature thereof being higher relative to the first combustion exhaust gas from which the waste heat has been recovered by the waste heat recovery unit, and then, the integrated combustion exhaust gas is resulted. This can adjust the temperature of the integrated combustion exhaust gas introduced into the nitrogen oxide removal unit to a range suitable for decomposing and removing nitrogen oxide, such that nitrogen oxide in the combustion exhaust gas discharged from the power generation facility can be efficiently removed. Since the temperature of the integrated combustion exhaust gas can be adjusted to be in a range suitable for decomposing and removing nitrogen oxide only by providing the second exhaust gas flow path, the increase in the facility cost can be also reduced. Therefore, the exhaust gas treatment device can be achieved in which nitrogen oxide can be efficiently removed and the increase in the facility cost can be reduced.

The exhaust gas treatment device according to the present invention preferably further includes a control unit that adjusts a flow rate of the first combustion exhaust gas flowing through the first exhaust gas flow path and a flow rate of the second combustion exhaust gas flowing through the second exhaust gas flow path to control such that a temperature of the integrated combustion exhaust gas introduced into the nitrogen oxide removal unit is 300°C or higher and 400°C or lower. This configuration enables the gas temperature of the integrated combustion exhaust gas introduced into the nitrogen oxide removal unit to be 300°C or higher and 400°C or lower that is suitable for decomposition treatment of nitrogen oxide, such that the accumulation amount of the nitrogen oxide-derived component in the CO₂ absorbing liquid in the CO₂ recovery unit can be efficiently reduced.

An exhaust gas treatment device according to the present invention includes a first exhaust gas flow path through which a first combustion exhaust gas discharged from a first power generation facility flows; a second exhaust gas flow path through which a second combustion exhaust gas discharged from a second power generation facility flows; a waste heat recovery unit that is provided to the first exhaust gas flow path and recovers waste heat of the first combustion exhaust gas; a nitrogen oxide removal unit configured to remove nitrogen oxide in an integrated combustion exhaust gas into which the first combustion exhaust gas and the second combustion exhaust gas are integrated, the first combustion exhaust gas flowing through the first exhaust gas flow path with the waste heat of the first combustion exhaust gas having been recovered by the waste heat recovery unit, and the second combustion exhaust gas flowing through the second exhaust gas flow path with a temperature of the second combustion exhaust gas being higher relative to the first combustion exhaust gas; an integrated waste heat recovery unit configured to recover waste heat of the integrated combustion exhaust gas with the nitrogen oxide having been removed by the nitrogen oxide removal unit; and a CO₂ recovery unit that recovers CO₂ in the integrated combustion exhaust gas by a CO₂ absorbing liquid with the waste heat of the integrated combustion exhaust gas having been recovered by the integrated waste heat recovery unit.

According to this configuration, the waste heat of the first combustion exhaust gas discharged from the first power generation facility is recovered by the waste heat recovery unit, while the first combustion exhaust gas is integrated with the second combustion exhaust gas flowing through the second exhaust gas flow path in a state of the temperature thereof being higher relative to the first combustion exhaust gas from which the waste heat has been recovered by the waste heat recovery unit, and then, the integrated combustion exhaust gas is resulted. This can adjust the temperature of the integrated combustion exhaust gas introduced into the nitrogen oxide removal unit to a range suitable for decomposing and removing nitrogen oxide, such that nitrogen oxide in the combustion exhaust gas discharged from the power generation facility can be efficiently removed. Since nitrogen oxide in the integrated combustion exhaust gas can be efficiently removed without providing the waste heat recovery unit to the second exhaust gas flow path, the increase in the facility cost can be also reduced. Therefore, the exhaust gas treatment device can be achieved in which nitrogen oxide can be efficiently removed and the increase in the facility cost can be reduced.

The exhaust gas treatment device according to the present invention preferably further includes a control unit configured to adjust a flow rate of each of the combustion exhaust gases flowing through the first exhaust gas flow path and the second exhaust gas flow path to control such that a temperature of the integrated combustion exhaust gas introduced into the nitrogen oxide removal unit is 300°C or higher and 400°C or lower. This configuration enables the gas temperature of the integrated combustion exhaust gas introduced into the nitrogen oxide removal unit to be 300°C or higher and 400°C or lower that is suitable for decomposition treatment of nitrogen oxide, such that the accumulation amount of the nitrogen oxide-derived component in the CO₂ absorbing liquid in the CO₂ recovery unit can be efficiently reduced.

In the exhaust gas treatment device according to the present invention, the nitrogen oxide removal unit is preferably provided within the integrated waste heat recovery unit. This configuration enables the integrated waste heat recovery unit and the nitrogen oxide removal unit to be formed into one body, and therefore, facilities of the exhaust gas treatment device can be reduced in size and simplified.

In the exhaust gas treatment device according to the present invention, the nitrogen oxide removal unit preferably includes a reducing agent injection unit configured to inject a nitrogen oxide removal catalyst removing the nitrogen oxide and a reducing agent. According to this configuration, the reducing agent and the nitrogen oxide removal catalyst enable nitrogen oxide contained in the integrated combustion gas to be further more efficiently decomposed and removed.

The exhaust gas treatment device according to the present invention preferably further includes: a control unit configured to control a supply amount of the reducing agent, based on a gas flow rate and nitrogen oxide concentration of the integrated combustion exhaust gas introduced into the CO₂ recovery unit. This configuration enables nitrogen oxide in the integrated combustion exhaust gas introduced into the CO₂ recovery unit to be easily controlled to be in a desired concentration range.

In the exhaust gas treatment device according to the present invention, the integrated waste heat recovery unit preferably generates a CO₂ compression portion-driving steam for compressing CO₂ discharged from the CO₂ recovery unit by using the waste heat of the integrated combustion exhaust gas with the nitrogen oxide having been removed, and supplies the generated CO₂ compression portion-driving steam to a CO₂ compression portion. This configuration makes it possible to effectively utilize the waste heat of the integrated combustion exhaust gas as the CO₂ compression portion-driving steam, and therefore, an operation cost of the exhaust gas treatment device can be reduced.

In the exhaust gas treatment device according to the present invention, the integrated waste heat recovery unit preferably generates a turbine-driving steam by using the waste heat of the integrated combustion exhaust gas with the nitrogen oxide having been removed, and supplies the generated turbine-driving steam to a steam turbine. This configuration makes it possible to effectively utilize the waste heat of the integrated combustion exhaust gas as the turbine-driving steam, and therefore, an operation cost of the exhaust gas treatment device can be reduced.

The exhaust gas treatment device according to the present invention preferably includes a heating unit configured to heat the integrated combustion exhaust gas provided on a front stage of the nitrogen oxide removal unit, the integrated waste heat recovery unit generates the turbine-driving steam by using the waste heat of the integrated combustion exhaust gas heated by the heating unit, and supplies the generated turbine-driving steam to the steam turbine. This configuration makes it possible to effectively utilize the waste heat of the integrated combustion exhaust gas as the turbine-driving steam, and therefore, an operation cost of the exhaust gas treatment device can be reduced. The heating unit can also adjust the temperature of the integrated combustion exhaust gas introduced into the integrated waste heat recovery unit to a desired temperature range.

In the exhaust gas treatment device according to the present invention, a control unit is preferably configured to measure the temperature and gas flow rate of the integrated combustion exhaust gas introduced into the nitrogen oxide removal unit, and controls at least one of an amount of a fuel supplied to a combustor in the power generation facility and an amount of the steam supplied to the steam turbine, based on the measured temperature and gas flow rate. This configuration enables control of the temperature and flow rate of the integrated combustion exhaust gas introduced into the nitrogen oxide removal unit to be in a desired range.

In the exhaust gas treatment device according to the present invention, the power generation facility preferably includes an existing power generation facility. According to this configuration, the temperature of the integrated combustion exhaust gas can be adjusted to be in a range suitable for decomposing and removing nitrogen oxide by also providing the first gas flow path and the second gas flow path to the existing power generation facility, and thus the increase in the facility cost can be also reduced.

An exhaust gas treatment method according to the present invention includes the steps of: removing nitrogen oxide in an integrated combustion exhaust gas into which a first combustion exhaust gas and a second combustion exhaust gas are integrated, the first combustion exhaust gas being discharged from a power generation device with waste heat of the first combustion exhaust gas having been recovered by a waste heat recovery unit which is provided to a first exhaust gas flow path, and the second combustion exhaust gas flowing through a second exhaust gas flow path which is provided to be connected between a front stage and a downstream stage of the waste heat recovery unit on the first exhaust gas flow path with a temperature of the second combustion exhaust gas being higher relative to the first combustion exhaust gas from which the waste heat has been recovered by the waste heat recovery unit; recovering waste heat of the integrated combustion exhaust gas with the nitrogen oxide having been removed; and recovering CO₂ in the integrated combustion exhaust gas by a CO₂ absorbing liquid, the waste heat of the integrated combustion exhaust gas having been recovered.

According to this method, the waste heat of the first combustion exhaust gas flowing through the first exhaust gas flow path is recovered by the waste heat recovery unit, while the first combustion exhaust gas is integrated with the second combustion exhaust gas flowing through the second exhaust gas flow path in a state of the temperature thereof being higher relative to the first combustion exhaust gas from which the waste heat has been recovered by the waste heat recovery unit, and then, the integrated combustion exhaust gas is resulted. This can adjust the temperature of the integrated combustion exhaust gas to a range suitable for decomposing and removing nitrogen oxide, such that nitrogen oxide in the combustion exhaust gas discharged from the power generation facility can be efficiently removed. Since nitrogen oxide in the combustion exhaust gas discharged from the power generation facility can be efficiently removed without providing the nitrogen oxide removal unit to the second exhaust gas flow path, the increase in the facility cost can be also reduced. Therefore, the exhaust gas treatment device can be achieved in which nitrogen oxide can be efficiently removed and the increase in the facility cost can be reduced.

An exhaust gas treatment method according to the present invention includes: removing nitrogen oxide in an integrated combustion exhaust gas into which a first combustion exhaust gas and a second combustion exhaust gas are integrated, the first combustion exhaust gas being discharged from a first power generation device with waste heat of the first combustion exhaust gas having been recovered by a waste heat recovery unit which is provided to a first exhaust gas flow path, and the second combustion exhaust gas being discharged from a second power generation device and flowing through a second exhaust gas flow path with a temperature of the second combustion exhaust gas being higher relative to the first combustion exhaust gas from which the waste heat has been recovered by the waste heat recovery unit; removing nitrogen oxide in the integrated combustion exhaust gas into which combustion exhaust gases are integrated, the combustion exhaust gases being discharged and flowing through a plurality of exhaust gas flow paths at least one of which is provided with a waste heat recovery unit that recovers waste heat of the combustion exhaust gas; recovering waste heat of the integrated combustion exhaust gas with the nitrogen oxide having been removed; and recovering CO2 in the integrated combustion exhaust gas by a CO2 absorbing liquid, the waste heat of the integrated combustion exhaust gas having been recovered.

According to this method, the waste heat of the first combustion exhaust gas discharged from the first power generation facility is recovered by the waste heat recovery unit, while the first combustion exhaust gas is integrated with the second combustion exhaust gas flowing through the second exhaust gas flow path in a state of the temperature thereof being higher relative to the first combustion exhaust gas from which the waste heat has been recovered by the waste heat recovery unit, and then, the integrated combustion exhaust gas is resulted. This can adjust the temperature of the integrated combustion exhaust gas to a range suitable for decomposing and removing nitrogen oxide, such that nitrogen oxide in the combustion exhaust gas discharged from the power generation facility can be efficiently removed. Since nitrogen oxide in the integrated combustion exhaust gas can be efficiently removed without providing the waste heat recovery unit to the second exhaust gas flow path, the increase in the facility cost can be also reduced. Therefore, the exhaust gas treatment device can be achieved in which nitrogen oxide can be efficiently removed and the increase in the facility cost can be reduced.

### Advantageous Effect of Invention

According to this method, an exhaust gas treatment device and an exhaust gas treatment method can be achieved which are capable of reducing the accumulation amount of the nitrogen oxide-derived component in the CO₂ absorbing liquid and capable of reducing the increase in the facility cost.

### Brief Description of Drawings

FIG. 1 is a schematic diagram illustrating an example of an exhaust gas treatment device according to a first embodiment.
FIG. 2 is a schematic diagram of a power generation facility according to the first embodiment.
FIG. 3 is a schematic diagram illustrating another example of the exhaust gas treatment device according to the first embodiment.
FIG. 4 is a schematic diagram illustrating another example of the exhaust gas treatment device according to the first embodiment.
FIG. 5 is a schematic diagram illustrating an example of an exhaust gas treatment device according to a second embodiment.
FIG. 6 is a schematic view illustrating another example of the exhaust gas treatment device according to the second embodiment.
FIG. 7 is a graph illustrating an accumulation amount of a nitrogen oxide-derived component in a CO₂ absorbing liquid in an exhaust gas treatment device according to an example and a comparative example.

### Description of Embodiments

The present inventors have focused on a matter that, according to an exhaust gas treatment device of related art, in order to efficiently remove nitrogen oxide in the combustion exhaust gas, a temperature of the combustion exhaust gas introduced into a nitrogen oxide removal unit needs to be kept at high temperature (for example, 300°C or higher and 400°C or lower), while the facility cost increases in a case where the nitrogen oxide removal unit is provided on a front stage of each of waste heat recovery units in a plurality of exhaust gas flow paths. Then, the present inventors have conceived an idea of dividing and causing the combustion exhaust gas discharged from the power generation facility to flow as a first combustion exhaust gas from which the waste heat has been recovered by the waste heat recovery unit and a second combustion exhaust gas from which the waste heat has not been recovered and of which a temperature is higher than the first combustion exhaust gas, and thereafter, integrating the first combustion exhaust gas and the second combustion exhaust gas into an integrated combustion exhaust gas to be introduced into the nitrogen oxide removal unit. From this idea, the present inventors have found that it is possible to make a gas temperature of the integrated combustion exhaust gas a temperature suitable for decomposing and removing nitrogen oxide, reduce an accumulation amount of a nitrogen oxide-derived component in a CO₂ absorbing liquid in a CO₂ recovery unit, and reduce increase in the facility cost, and completed the present invention.

Hereinafter, embodiments of the present invention will be described in detail while referring to the attached drawings. Note that the present invention is not limited to the following embodiments and the present invention can be carried out by applying suitable modifications.

### First Embodiment

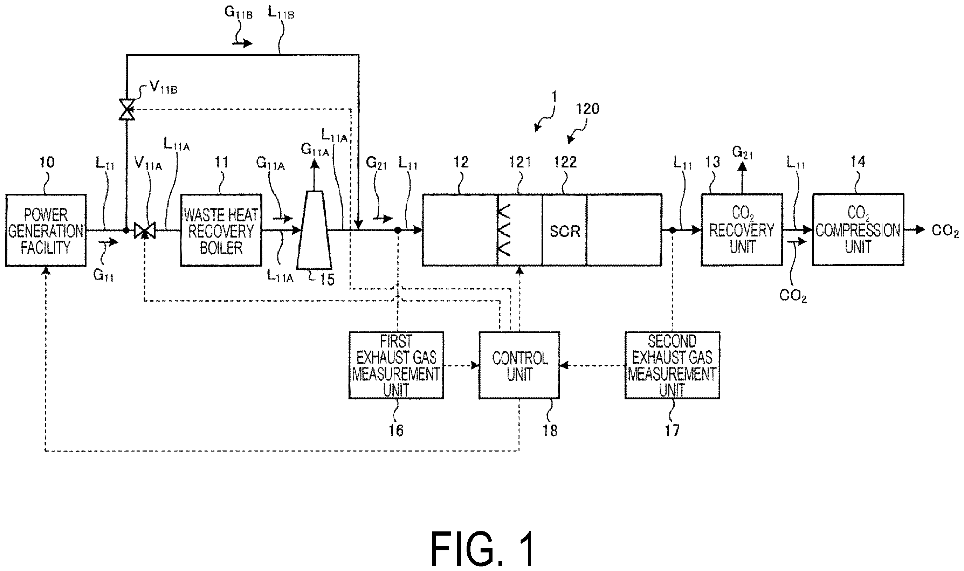

FIG. 1 is a schematic view illustrating an example of an exhaust gas treatment device 1 according to a first embodiment of the present invention. As illustrated in FIG. 1, the exhaust gas treatment device 1 according to the present embodiment recovers, by a waste heat recovery boiler 11 and an integrated waste heat recovery boiler 12, waste heat of a combustion exhaust gas G₁₁ discharged from a power generation facility 10 generating the combustion exhaust gas G₁₁, and thereafter, recovers CO₂ contained in an integrated combustion exhaust gas G₂₁ by a CO₂ recovery unit 13. The exhaust gas treatment device 1 includes the power generation facility 10 discharging the combustion exhaust gas G₁₁, the waste heat recovery boiler 11 provided on a downstream stage of the power generation facility 10 in a flow direction of the combustion exhaust gas G₁₁, the integrated waste heat recovery boiler 12 provided on a downstream stage of the waste heat recovery boiler 11, the CO₂ recovery unit 13 provided on a downstream stage of the integrated waste heat recovery boiler 12, and a CO₂ compression portion 14 provided on a downstream stage of the CO₂ recovery unit 13. A stack 15 discharging a part of the combustion exhaust gas G₁₁ is provided between the waste heat recovery boiler 11 and the integrated waste heat recovery boiler 12.

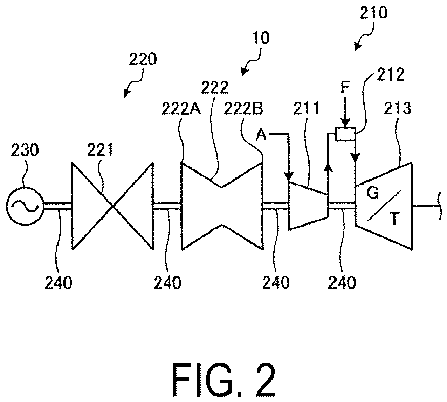

FIG. 2 is a schematic view of the power generation facility 10 according to the present embodiment. As illustrated in FIG. 2, the power generation facility 10 is a single-shaft type combined power generation facility (gas turbine combined cycle) in which a gas turbine 210, a steam turbine 220, and a generator 230 are configured in one shaft. The gas turbine 210 includes a compressor 211 that compresses an air A, a combustor 212 that combusts a fuel F with the air A compressed by the compressor 211, and a turbine 213 that is rotationally driven by a combustion gas generated in the combustor 212. The compressor 211 is connected to the turbine 213 via a turbine shaft 240.

The steam turbine 220 includes a low-pressure steam turbine 221 that is rotationally driven by a low-pressure steam, and a medium-pressure/high-pressure steam turbine 222 in which a mid-pressure steam turbine 222A that is rotationally driven by a medium-pressure steam is connected to a high-pressure steam turbine 222B that is rotationally driven by a high-pressure steam. The low-pressure steam turbine 221 and the medium-pressure/high-pressure steam turbine 222 are connected to the generator 230 and the gas turbine 210 via the turbine shaft 240. The generator 230 generates power by the rotational drive of the gas turbine 210 and the steam turbine 220 via the turbine shaft 240.

The power generation facility 10 supplies the combustion exhaust gas G₁₁ generated by the power generation to the waste heat recovery boiler 11 via an exhaust gas line L₁₁. The exhaust gas line L₁₁ is provided with a branch exhaust gas line L_{11B} between a front stage and a downstream stage of the waste heat recovery boiler 11 in the exhaust gas line L₁₁, the branch exhaust gas line L_{11B} branching from the exhaust gas line L₁₁. Specifically, in the present embodiment, the exhaust gas line L₁₁ is branched into a main exhaust gas line (first exhaust gas flow path) L_{11A} and a branch exhaust gas line (second exhaust gas flow path) L_{11B} between the front stage and the downstream stage of the waste heat recovery boiler 11.

The exhaust gas line L₁₁ is provided with a flow rate control valve V_{11A}, the waste heat recovery boiler 11, and the stack 15 in this order. The flow rate control valve V_{11A} adjusts a flow rate of the combustion exhaust gas (first combustion exhaust gas) G_{11A} flowing through the main exhaust gas line L_{11A}. The waste heat recovery boiler 11 recovers the waste heat of the combustion exhaust gas G_{11A} flowing through the main exhaust gas line L_{11A}, and supplies the combustion exhaust gas G_{11A} from which the waste heat has been recovered to the stack 15. The stack 15 discharges a part of the combustion exhaust gas G_{11A} to outside as needed, and supplies the combustion exhaust gas G_{11A} to the integrated waste heat recovery boiler 12. The branch exhaust gas line L_{11B} is provided with a flow rate control valve V_{11B}. The flow rate control valve V_{11B} adjusts a flow rate of the combustion exhaust gas (second combustion exhaust gas) G_{11B} flowing through the branch exhaust gas line L_{11B}. The branch exhaust gas line L_{11B} supplies a part or all of the combustion exhaust gas G₁₁ flowing through the exhaust gas line L₁₁ to the integrated waste heat recovery boiler 12 without using the waste heat recovery boiler 11 and the stack 15.

The integrated waste heat recovery boiler 12 is supplied with the integrated combustion exhaust gas G₂₁ in which the combustion exhaust gas G_{11A} flowing through the main exhaust gas line L_{11A} and the combustion exhaust gas G_{11B} flowing through the branch exhaust gas line L_{11B} are integrated. The integrated waste heat recovery boiler 12 recovers the waste heat of the integrated combustion exhaust gas G₂₁. The integrated waste heat recovery boiler 12 is provided with, within thereof, a nitrogen oxide removal unit 120 that reduces and removes nitrogen oxide such as nitrogen monoxide and nitrogen dioxide contained in the integrated combustion exhaust gas G₂₁. In this way, by providing the nitrogen oxide removal unit 120 within the integrated waste heat recovery boiler 12, the exhaust gas treatment device 1 can be reduced in size. Note that the nitrogen oxide removal unit 120 may not be necessarily provided in an integrated form with the integrated waste heat recovery boiler 12, and may be provided outside the integrated waste heat recovery boiler 12.

The nitrogen oxide removal unit 120 includes a reducing agent supply unit 121 that injects a reducing agent into the integrated combustion exhaust gas G₂₁ to reduce nitrogen oxide, and a selective catalytic reduction (SCR) unit 122 that is provided on a downstream stage of the reducing agent supply unit 121 and filled with a DeNOx catalyst selectively reducing nitrogen oxide. The reducing agent in the reducing agent supply unit 121 is not specifically limited so long as it can decompose and remove nitrogen oxide such as nitrogen monoxide and nitrogen dioxide. The DeNOx catalyst in the selective catalytic reduction unit 122 is not specifically limited so long as it can decompose and remove nitrogen oxide such as nitrogen monoxide and nitrogen dioxide.

The integrated waste heat recovery boiler 12, in the nitrogen oxide removal unit 120, supplies the reducing agent from the reducing agent supply unit 121 to the integrated combustion exhaust gas G₂₁, and performs a decomposition treatment by the selective catalytic reduction unit 122 on nitrogen oxide supplied with the reducing agent. The integrated waste heat recovery boiler 12 recovers the waste heat of the integrated combustion exhaust gas G₂₁ of which nitrogen oxide has undergone the decomposition treatment, and supplies the integrated combustion exhaust gas G₂₁ from which the waste heat has been recovered to the CO₂ recovery unit 13.

The CO₂ recovery unit 13 includes a CO₂ absorbing tower that recovers carbon dioxide (CO₂) in the integrated combustion exhaust gas G₂₁ by the CO₂ absorbing liquid, and a CO₂ regeneration tower that heats the CO₂ absorbing liquid having absorbed CO₂ to release CO₂ from the CO₂ absorbing liquid. A CO₂ absorbing liquid is not specifically limited so long as it can recover carbon dioxide (CO₂) in the integrated combustion exhaust gas G₂₁, and an amine series absorbing liquid can be used, for example. The CO₂ recovery unit 13 discharges, to outside, the integrated combustion exhaust gas G₂₁ from which CO₂ has been recovered, and supplies the recovered CO₂ to the CO₂ compression portion 14. The CO₂ compression portion 14 compresses and discharges CO₂ supplied from the CO₂ recovery unit 13.

The exhaust gas treatment device 1 includes a first exhaust gas measurement unit 16 that measures a gas flow rate and temperature of the integrated combustion exhaust gas G₂₁ introduced into the integrated waste heat recovery boiler 12, a second exhaust gas measurement unit 17 that measures a gas flow rate and nitrogen oxide concentration of the integrated combustion exhaust gas G₂₁ introduced into the CO₂ recovery unit 13, and a control unit 18 that controls a supply amount of a fuel F supplied to the power generation facility 10 and a supply amount of the reducing agent supplied from the reducing agent supply unit 121 to the integrated combustion exhaust gas G₂₁. The control unit 18 adjusts opening amounts of the flow rate control valves V_{11A} and V_{11B}, and the supply amount of the fuel supplied to the power generation facility 10, based on the gas flow rate and temperature of the integrated combustion exhaust gas G₁ measured by the first exhaust gas measurement unit 16. The control unit 18 controls the supply amount of the fuel F supplied to the power generation facility 10, based on the gas flow rate and nitrogen oxide concentration of the integrated combustion exhaust gas G₁ measured by the second exhaust gas measurement unit 17. The measurement of the gas flow rate and the temperature by the first exhaust gas measurement unit 16, and the measurement of the gas flow rate and the nitrogen oxide concentration by the second exhaust gas measurement unit 17 are performed using a publicly known method of related art.

The control unit 18 adjusts the opening amounts of the flow rate control valves V_{11A} and V_{11B}, and the supply amount of the fuel F supplied to the power generation facility 10 to control such that the temperature of the integrated combustion exhaust gas G₂₁ measured by the first exhaust gas measurement unit 16 is 300°C or higher and 400°C or lower. By such control, the exhaust gas treatment device 1 can make the temperature of the integrated combustion exhaust gas G₂₁ supplied to the nitrogen oxide removal unit 120 in the integrated waste heat recovery boiler 12 a temperature suitable for decomposing and removing nitrogen oxide, so that nitrogen oxide in the integrated combustion exhaust gas G₂₁ can be further more efficiently decomposed and removed.

In a case where the temperature of the integrated combustion exhaust gas G₂₁ measured by the first exhaust gas measurement unit 16 is lower than 300°C, the control unit 18 controls at least one of the opening amount of the flow rate control valve V_{11A} to be decreased and the opening amount of the flow rate control valve V_{11B} to be increased, so that a ratio, in the integrated combustion exhaust gas G₂₁, of the combustion exhaust gas G_{11B} having flowed through the branch exhaust gas line L_{11B} is increased with respect to the combustion exhaust gas G_{11A} having flowed through the main exhaust gas line L_{11A}. This can increase the ratio of the combustion exhaust gas G_{11B} relative to the combustion exhaust gas G_{11A}, where the temperature of the combustion exhaust gas G_{11A} is decreased because the heat thereof has been recovered by the waste heat recovery boiler 11 and the temperature of the combustion exhaust gas G_{11B} is high because the heat thereof has not been recovered by the waste heat recovery boiler 11, and therefore, the temperature of the integrated combustion exhaust gas G₂₁ measured by the first exhaust gas measurement unit 16 increases. The control unit 18 may maintain the opening amounts of the flow rate control valves V_{11A} and V_{11B} to increase the feed amount of the fuel F supplied to the power generation facility 10 so as to increase the temperature of the integrated combustion exhaust gas G₂₁.

In a case where the temperature of the integrated combustion exhaust gas G₂₁ measured by the first exhaust gas measurement unit 16 exceeds 400°C, the control unit 18 controls at least one of the opening amount of the flow rate control valve V_{11A} to be increased and the opening amount of the flow rate control valve V_{11B} to be decreased, so that the ratio, in the integrated combustion exhaust gas G₂₁, of the combustion exhaust gas G_{11B} flowing through the branch exhaust gas line L_{11B} is decreased with respect to the combustion exhaust gas G_{11A} flowing through the main exhaust gas line L_{11A}. This can decrease the ratio of the combustion exhaust gas G_{11B} relative to the combustion exhaust gas G_{11A}, where the temperature of the combustion exhaust gas G_{11A} is decreased because the heat thereof has been recovered by the waste heat recovery boiler 11, and where the temperature of the combustion exhaust gas G_{11B} is high because the heat thereof has not been recovered by the waste heat recovery boiler 11, and therefore, the temperature of the integrated combustion exhaust gas G₂₁ measured by the first exhaust gas measurement unit 16 decreases. The control unit 18 may maintain the opening amounts of the flow rate control valves V_{11A} and V_{11B} to decrease the feed amount of the fuel F supplied to the power generation facility 10 so as to decrease the temperature of the integrated combustion exhaust gas G₂₁.

The control unit 18 adjusts the supply amount of the reducing agent supplied from the reducing agent supply unit 121, and controls the nitrogen oxide concentration in the integrated combustion exhaust gas G₂₁ measured by the second exhaust gas measurement unit 17 to be a predetermined value or less. In case that the nitrogen oxide concentration in the integrated combustion exhaust gas G₂₁ measured by the second exhaust gas measurement unit 17 exceeds the predetermined value, the control unit 18 increases the supply amount of the reducing agent from the reducing agent supply unit 121. In case that the nitrogen oxide concentration in the integrated combustion exhaust gas G₂₁ measured by the second exhaust gas measurement unit 17 is less than the predetermined value, the control unit 18 maintains or decreases the supply amount of the reducing agent from the reducing agent supply unit 121. By such control, the exhaust gas treatment device 1 can control the nitrogen oxide concentration in the integrated combustion exhaust gas G₂₁ introduced into the CO₂ recovery unit 13 to be the predetermined value or less, so that it is possible to efficiently reduce the nitrogen oxide in the integrated combustion exhaust gas G₂₁ after CO₂ discharged from the CO₂ recovery unit 13 is recovered.

Next, the overall operation of the exhaust gas treatment device 1 according to the present embodiment will be described. The combustion exhaust gas G₁₁ discharged from the power generation facility 10 via the exhaust gas line L₁₁ is branched into the combustion exhaust gas G_{11A} flowing through the main exhaust gas line L_{11A} and the combustion exhaust gas G_{11B} flowing through the branch exhaust gas line L_{11B}. The combustion exhaust gas G_{11A} flowing through the main exhaust gas line L_{11A}, with the waste heat of the gas G_{11A} being recovered by the waste heat recovery boiler 11 to decrease the temperature, after a part of the gas G_{11A} is discharged from the stack 15, is integrated in the exhaust gas line L₁₁ with the combustion exhaust gas G_{11B} flowing through the branch exhaust gas line L_{11B}. The combustion exhaust gas G_{11B} flowing through the branch exhaust gas line L_{11B}, in a state of a high temperature without via the waste heat recovery boiler 11, is integrated in the exhaust gas line L₁₁ with the combustion exhaust gas G_{11A} flowing through the main exhaust gas line.

The integrated combustion exhaust gas G₂₁ in which the combustion exhaust gas G_{11A} and the combustion exhaust gas G_{11B} are integrated is supplied via the exhaust gas line L₁₁ to the integrated waste heat recovery boiler 12. Here, the control unit 18 controls valve opening amounts of the flow rate control valves V_{11A} and V_{11B} and the supply amount of the fuel F supplied to the power generation facility 10 as needed, such that the temperature of the integrated combustion exhaust gas G₂₁ is a predetermined temperature (for example, 300°C or higher and 400°C or lower). The integrated combustion exhaust gas G₂₁ supplied to the integrated waste heat recovery boiler 12 is supplied with the reducing agent by the reducing agent supply unit 121 in the nitrogen oxide removal unit 120, and, after nitrogen oxide is decomposed and removed by selective catalytic reduction unit 122, is supplied to the CO₂ recovery unit 13. Here, the control unit 18 controls an amount of the reducing agent supplied from the reducing agent supply unit 121 to the integrated combustion exhaust gas G₂₁ as needed, such that nitrogen oxide in the integrated combustion exhaust gas G₂₁ supplied to the CO₂ recovery unit 13 is a predetermined value or less. The integrated combustion exhaust gas G₂₁ supplied to the CO₂ recovery unit 13, after CO₂ is recovered by the CO₂ absorbing liquid, is discharged out of the exhaust gas treatment device 1. CO₂ in the integrated combustion exhaust gas G₂₁ recovered by the CO₂ absorbing liquid is heated to be released from the CO₂ absorbing liquid, and thereafter, supplied to the CO₂ compression portion 14, and compressed and discharged.

As described above, according to the above-described embodiment, the combustion exhaust gas G₁₁ discharged from the power generation facility 10 is branched into the main exhaust gas line L_{11A} and the branch exhaust gas line L_{11B}, and thereafter, the waste heat of the combustion exhaust gas G_{11A} is recovered by the waste heat recovery boiler 11 provided to the main exhaust gas line L_{11A}, while the combustion exhaust gas G_{11A} after the waste heat is recovered is integrated with the combustion exhaust gas G_{11B} flowing through the branch exhaust gas line L_{11B} in a state of high temperature that the temperature is higher than the combustion exhaust gas G_{11A}, to be the integrated combustion exhaust gas G₂₁. This can adjust the temperature of the integrated combustion exhaust gas G₂₁ introduced into the integrated waste heat recovery boiler 12 to a range suitable for decomposing and removing nitrogen oxide, such that nitrogen oxide in the combustion exhaust gas discharged from the power generation facility 10 can be efficiently removed. Since the temperature of the integrated combustion exhaust gas G₂₁ can be adjusted to be in a range suitable for decomposing and removing nitrogen oxide by simply providing the branch exhaust gas line L_{11B}, the increase in the facility cost can be also reduced. Therefore, the exhaust gas treatment device 1 can be achieved in which nitrogen oxide can be efficiently removed and the increase in the facility cost can be reduced.

The embodiment described above describes the configuration in which the waste heat recovery boiler 11 is provided to the main exhaust gas line L_{11A}, but the waste heat recovery boiler 11 may be configured to be provided to the branch exhaust gas line L_{11B}, or the waste heat recovery boiler 11 may be configured to be provided to both the main exhaust gas line L_{11A} and the branch exhaust gas line L_{11B}. In a case where waste heat recovery boiler 11 is provided to both the main exhaust gas line L_{11A} and the branch exhaust gas line L_{11B}, the integrated combustion exhaust gas G₂₁ can be adjusted to a desired temperature by differentiating a recovery amount of the waste heat from the combustion exhaust gas G_{11A} in the waste heat recovery boiler 11 on the main exhaust gas line L_{11A} from a recovery amount of the waste heat from the combustion exhaust gas G_{11B} in the waste heat recovery boiler 11 on the branch exhaust gas line L_{11B}. The power generation facility 10 may be an existing power generation facility, or a newly built power generation facility. In a case where the power generation facility 10 is an existing power generation facility, the configuration of the exhaust gas treatment device 1 according to the above-described embodiment can be obtained by simply providing the branch exhaust gas line L_{11B} to an existing exhaust gas line.

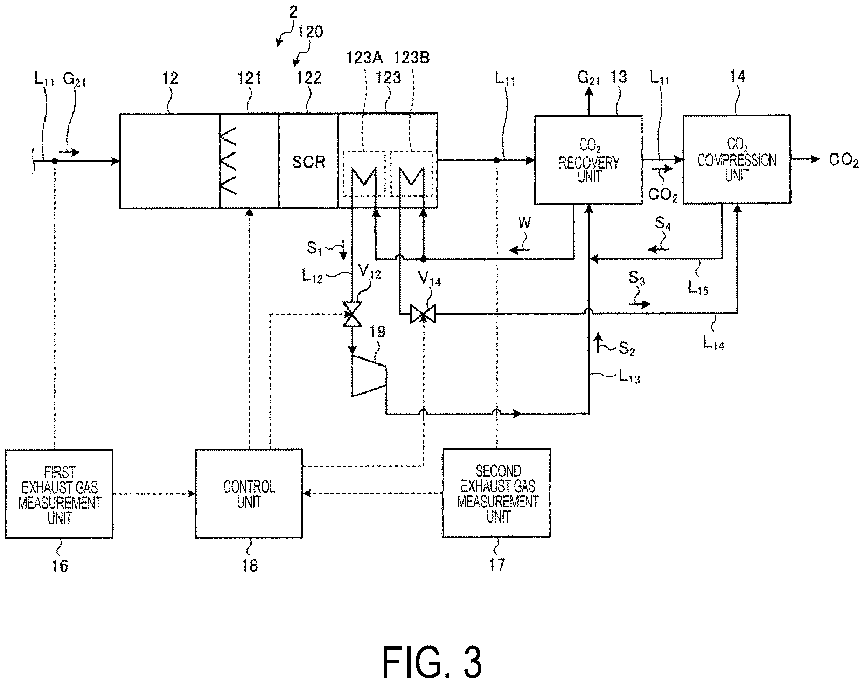

The configuration of the integrated waste heat recovery boiler 12 in the embodiment described above can be adequately modified. FIG. 3 is a schematic view illustrating another example of the exhaust gas treatment device 1 according to the above-described embodiment. In an exhaust gas treatment device 2 illustrated in FIG. 3, the integrated waste heat recovery boiler 12 includes a steam generation unit 123 provided on a downstream stage of the nitrogen oxide removal unit 120. The steam generation unit 123 includes a turbine-driving steam generation unit 123A provided on a downstream stage of the nitrogen oxide removal unit 120 in the flow direction of the integrated combustion exhaust gas G₂₁, and a CO₂ compression portion-driving steam generation unit 123B provided on a downstream stage of the turbine-driving steam generation unit 123A.

The turbine-driving steam generation unit 123A recovers the waste heat of the integrated combustion exhaust gas G₂₁ from which nitrogen oxide has been removed to generate a turbine-driving steam S₁ that is a low-pressure steam for driving the low-pressure steam turbine 19. The turbine-driving steam generation unit 123A supplies the generated turbine-driving steam S₁ to the low-pressure steam turbine 19 via a steam supply line L₁₂. The low-pressure steam turbine 19 may be a turbine provided outside the exhaust gas treatment device 2, or the low-pressure steam turbine 221 in the power generation facility 10 illustrated in FIG. 2. The low-pressure steam turbine 19 is rotationally driven by the turbine-driving steam S₁ to generate power by a generator (not illustrated in the drawing). This allows the exhaust gas treatment device 2 to generate power by using the waste heat of the integrated combustion exhaust gas G₂₁ recovered by the integrated waste heat recovery boiler 12, and therefore, the steam required for driving the low-pressure steam turbine 19 can be reduced. The low-pressure steam turbine 19 supplies the turbine-driving steam S₁ after driving the turbine as a CO₂ absorbing liquid-regenerating steam S₂ to the CO₂ recovery unit 13 via a steam discharge line L₁₃.

The CO₂ compression portion-driving steam generation unit 123B recovers the waste heat of the integrated combustion exhaust gas G₂₁ from which nitrogen oxide has been removed to generate a CO₂ compression portion-driving steam S₃ that is a low-pressure steam for driving the CO₂ compression portion 14. The CO₂ compression portion-driving steam generation unit 123B supplies the generated CO₂ compression portion-driving steam S₃ to the CO₂ compression portion 14 via a steam supply line L₁₄. The CO₂ compression portion 14 drives the CO₂ compression portion by using the CO₂ compression portion-driving steam S₃ to compress CO₂. This allows the exhaust gas treatment device 2 to compress CO₂ by using the waste heat of the integrated combustion exhaust gas G₂₁ recovered by the integrated waste heat recovery boiler 12, and therefore, the steam required for compressing CO₂ can be reduced. The CO₂ compression portion 14 supplies the CO₂ compression portion-driving steam S₃ after driving the CO₂ compression portion as a CO₂ absorbing liquid-regenerating steam S₄ to the CO₂ recovery unit 13 via a steam discharge line L₁₅.

The CO₂ recovery unit 13 supplies the CO₂ absorbing liquid-regenerating steams S₂ and S₄ to a reboiler in the CO₂ regeneration tower to release CO₂ from the CO₂ absorbing liquid having recovered CO₂. This allows the exhaust gas treatment device 2 to reduce the steam used for the reboiler in the CO₂ absorbing tower. The CO₂ recovery unit 13 supplies a condensed water W in which condensed is the CO₂ absorbing liquid-regenerating steams S₂ and S₄ having been used for the reboiler in the CO₂ absorbing tower to the turbine-driving steam generation unit 123A and the CO₂ compression portion-driving steam generation unit 123B in the integrated waste heat recovery boiler 12.

The control unit 18 controls a supply amount of the fuel F supplied to the combustor 212 in the power generation facility 10, a supply amount of the turbine-driving steam S₁ supplied to the low-pressure steam turbine 19, and a supply amount of the CO₂ compression portion-driving steam S₃ supplied to the CO₂ compression portion 14, based on the temperature and gas flow rate of the integrated combustion exhaust gas G₂₁, measured by the first exhaust gas measurement unit 16 and introduced into the nitrogen oxide removal unit 120. In a case where the temperature and gas flow rate of the integrated combustion exhaust gas G₂₁ introduced into the nitrogen oxide removal unit 120 is less than a predetermined range, the control unit 18 increases the fuel F supplied to the combustor 212 in the power generation facility 10. In a case where the temperature and gas flow rate of the integrated combustion exhaust gas G₂₁ introduced into the nitrogen oxide removal unit 120 exceeds the predetermined range, the control unit 18 decreases the fuel F supplied to the combustor 212 in the power generation facility 10. In a case where the temperature and gas flow rate of the integrated combustion exhaust gas G₂₁ introduced into the nitrogen oxide removal unit 120 is less than the predetermined range, the control unit 18 decreases an opening amount of at least one of a flow rate control valve V₁₂ provided to the steam supply line L₁₂ and a flow rate control valve V₁₄ provided to the steam supply line L₁₄ to decrease the supply amount of at least one of the turbine-driving steam S₁ supplied to the low-pressure steam turbine 19 and the CO₂ compression portion-driving steam S₃ supplied to the CO₂ compression portion 14. In a case where the temperature and gas flow rate of the integrated combustion exhaust gas G₂₁ introduced into the nitrogen oxide removal unit 120 exceeds the predetermined range, the control unit 18 increases the opening amount of at least one of the flow rate control valve V₁₂ provided to the steam supply line L₁₂ and the flow rate control valve V₁₄ provided to the steam supply line L₁₄ to increase the supply amount of at least one of the turbine-driving steam S₁ supplied to the low-pressure steam turbine 19 and the CO₂ compression portion-driving steam S₃ supplied to the CO₂ compression portion 14. By such control, the temperature of the integrated combustion exhaust gas G₂₁ introduced into the nitrogen oxide removal unit 120 can be controlled to be in a range suitable for decomposing and removing nitrogen oxide, so that nitrogen oxide in the integrated combustion exhaust gas G₂₁ can be efficiently reduced.

As described above, according to the exhaust gas treatment device 2 in the above-described embodiment, by virtue of the turbine-driving steam generation unit 123A and the CO₂ compression portion-driving steam generation unit 123B in the integrated waste heat recovery boiler 12, the turbine-driving steam S₁ required for rotationally driving the low-pressure steam turbine 19, the CO₂ compression portion-driving steam S₃ required for compressing CO₂, and the CO₂ absorbing liquid-regenerating steams S₂ and S₄ required for regenerating the CO₂ absorbing liquid can be acquired, so that an amount of the steam used in the whole exhaust gas treatment device 2 can be reduced.

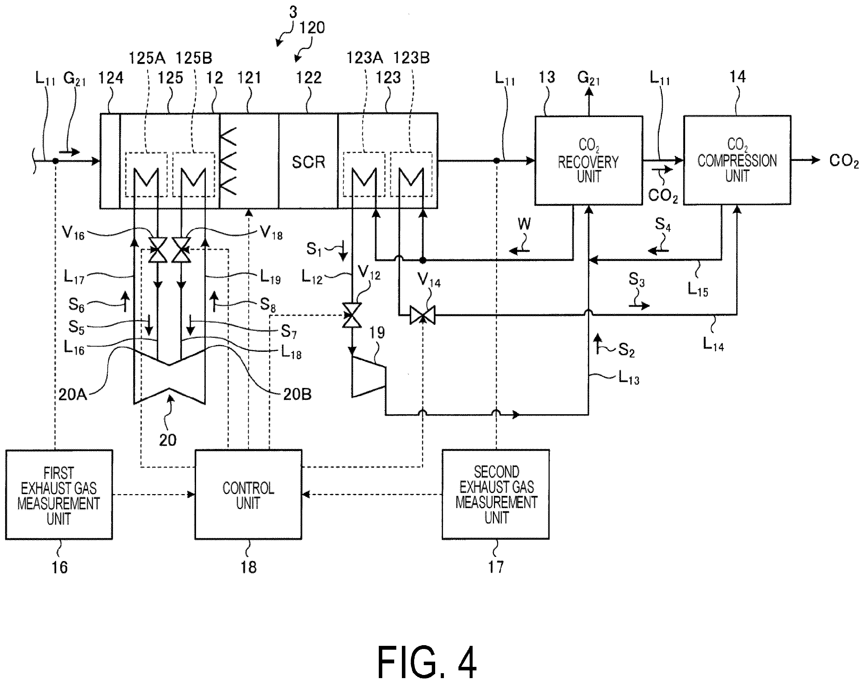

FIG. 4 is a schematic view illustrating another example of the exhaust gas treatment device 2 according to the above-described embodiment. In an exhaust gas treatment device 3 illustrated in FIG. 4, the integrated waste heat recovery boiler 12 includes, besides the steam generation unit 123 illustrated in FIG. 3, a heating unit 124 provided on a front stage of the nitrogen oxide removal unit 120 where is an introducing part of the integrated combustion exhaust gas G₂₁, and a steam generation unit 125 provided between the heating unit 124 and the nitrogen oxide removal unit 120. The steam generation unit 125 is provided on a downstream stage of the heating unit 124, and includes a turbine-driving steam generation unit 125A that generates a high-pressure steam for rotationally driving a high-pressure steam turbine 20A of a medium-pressure/high-pressure steam turbine 20, and a turbine-driving steam generation unit 125B that is provided on a downstream stage of the turbine-driving steam generation unit 125A and generates a medium-pressure steam for rotationally driving a mid-pressure steam turbine 20B of the medium-pressure/high-pressure steam turbine 20.

The heating unit 124 heats the integrated combustion exhaust gas G₂₁ introduced into the integrated waste heat recovery boiler 12 (for example, 500°C or higher and 600°C or lower), and supplies the heated integrated combustion exhaust gas G₂₁ to the turbine-driving steam generation unit 125A in the steam generation unit 125. The integrated combustion exhaust gas G₂₁ can be heated by use of a publicly known general heating device. In a case where the temperature of the integrated combustion exhaust gas G₂₁ introduced into the integrated waste heat recovery boiler 12 is high, the heating unit 124 may not be necessarily provided.

The turbine-driving steam generation unit 125A recovers the waste heat of the integrated combustion exhaust gas G₂₁ heated by the heating unit 124 to generate a turbine-driving steam S₅ that is a high-pressure steam for driving the high-pressure steam turbine 20A of the medium-pressure/high-pressure steam turbine 20. The turbine-driving steam generation unit 125A supplies the generated turbine-driving steam S₅ to the high-pressure steam turbine 20A via a steam supply line L₁₆. The medium-pressure/high-pressure steam turbine 20 may be that provided outside the exhaust gas treatment device 3, or the medium-pressure/high-pressure steam turbine 222 in the power generation facility 10 illustrated in FIG. 2. The high-pressure steam turbine 20A is rotationally driven by the turbine-driving steam S₅ to generate power by a generator (not illustrated in the drawing). This allows the exhaust gas treatment device 3 to generate power by using the waste heat of the integrated combustion exhaust gas G₂₁ recovered by the integrated waste heat recovery boiler 12, and therefore, the steam required for driving the medium-pressure/high-pressure steam turbine 20 can be reduced. The high-pressure steam turbine 20A supplies a turbine-driving steam S₆ after driving the turbine to the turbine-driving steam generation unit 125A via a steam discharge line L₁₇.

The turbine-driving steam generation unit 125B recovers the waste heat of the integrated combustion exhaust gas G₂₁ heated by the heating unit 124 to generate a turbine-driving steam S₇ that is a medium-pressure steam for driving the mid-pressure steam turbine 20B of the medium-pressure/high-pressure steam turbine 20. The turbine-driving steam generation unit 125B supplies the generated turbine-driving steam S₇ to the mid-pressure steam turbine 20B via a steam supply line Lis. The mid-pressure steam turbine 20B is rotationally driven by the turbine-driving steam S₇ to generate power by a generator (not illustrated in the drawing). This allows the exhaust gas treatment device 3 to generate power by using the waste heat of the integrated combustion exhaust gas G₂₁ recovered by the integrated waste heat recovery boiler 12, and therefore, the steam required for driving the mid-pressure steam turbine 20B can be reduced. The mid-pressure steam turbine 20B supplies a turbine-driving steam S₈ after driving the turbine to the turbine-driving steam generation unit 125B via a steam discharge line L₁₉.

The control unit 18 controls supply amounts of the turbine-driving steams S₅ and S₇ supplied to the medium-pressure/high-pressure steam turbine 20, based on the temperature and gas flow rate of the integrated combustion exhaust gas G₂₁, measured by the first exhaust gas measurement unit 16 and introduced into the nitrogen oxide removal unit 120. In a case where the temperature and gas flow rate of the integrated combustion exhaust gas G₂₁ introduced into the nitrogen oxide removal unit 120 is less than a predetermined range, the control unit 18 decreases an opening amount of at least one of a flow rate control valve V₁₆ provided to the steam supply line L₁₆ and a flow rate control valve V₁₈ provided to the steam supply line L₁₈ to decrease at least one of the turbine-driving steams S₅ and S₇ supplied to the medium-pressure/high-pressure steam turbine 20. In a case where the temperature and gas flow rate of the integrated combustion exhaust gas G₂₁ introduced into the nitrogen oxide removal unit 120 exceeds a predetermined range, the control unit 18 increases the opening amount of at least one of the flow rate control valve V₁₆ provided to the steam supply line L₁₆ and the flow rate control valve V₁₈ provided to the steam supply line L₁₈ to increase at least one of the supply amounts of the turbine-driving steams S₅ and S₇ supplied to the medium-pressure/high-pressure steam turbine 20. By such control, the temperature of the integrated combustion exhaust gas G₂₁ introduced into the nitrogen oxide removal unit 120 can be controlled to be in a range suitable for decomposing and removing nitrogen oxide, so that nitrogen oxide in the integrated combustion exhaust gas G₂₁ can be efficiently reduced.

As described above, according to the exhaust gas treatment device 3 in the above-described embodiment, by virtue of the turbine-driving steam generation units 125A and 125B in the integrated waste heat recovery boiler 12, the turbine-driving steams S₅ and S₇ required for rotationally driving the medium-pressure/high-pressure steam turbine 20 can be acquired, so that an amount of the steam used in the whole exhaust gas treatment device 3 can be reduced.

### Second Embodiment

Next, a second embodiment of the present invention will be described. In the following embodiment, a description is mainly given of differences from the embodiment described above to omit duplicated explanations. Note that, components the same as those in the first embodiment described above are designated by the same reference signs. Furthermore, embodiments described below can be suitably combined for implementation.

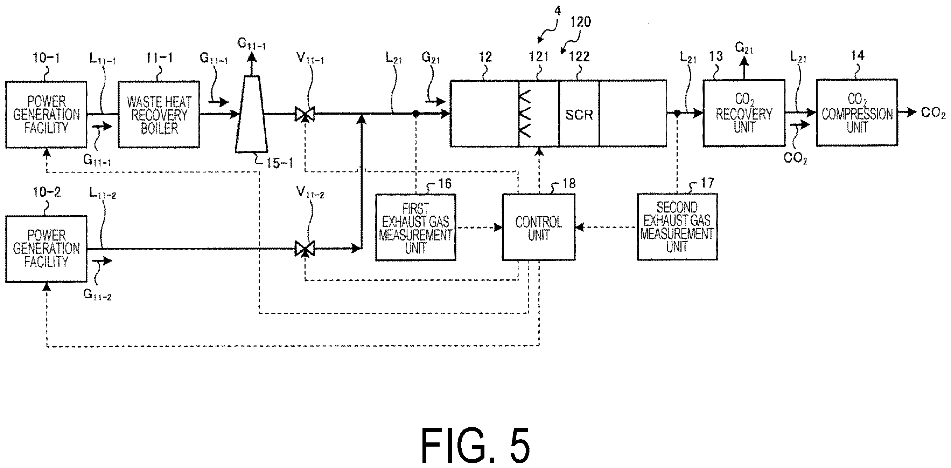

FIG. 5 is a schematic view illustrating an example of an exhaust gas treatment device 4 according to the second embodiment of the present invention. As illustrated in FIG. 5, the exhaust gas treatment device 4 according to the present embodiment recovers waste heat of combustion exhaust gases G₁₁₋₁ and G₁₁₋₂ respectively discharged from two power generation facilities 10-1 and 10-2 by the integrated waste heat recovery boiler 12, and thereafter, recovers CO₂ contained in the combustion exhaust gases G₁₁₋₁ and G₁₁₋₂ by the CO₂ recovery unit 13. The exhaust gas treatment device 4 includes the power generation facility (first power generation facility) 10-1 discharging the combustion exhaust gas (first combustion exhaust gas) G₁₁₋₁, the power generation facility (second power generation facility) 10-2 discharging the combustion exhaust gas (second combustion exhaust gas) G₁₁₋₂, a waste heat recovery boiler 11-1 provided on a downstream stage of the power generation facility 10-1 in a flow direction of the combustion exhaust gas G₁₁₋₁, the integrated waste heat recovery boiler 12 provided on a downstream stage of the waste heat recovery boiler 11-1, the CO₂ recovery unit 13 provided on a downstream stage of the integrated waste heat recovery boiler 12, and the CO₂ compression portion 14 provided on a downstream stage of the CO₂ recovery unit 13. A stack 15-1 discharging a part of the combustion exhaust gas G₁₁₋₁ is provided between the waste heat recovery boiler 11-1 and the integrated waste heat recovery boiler 12.

The power generation facility 10-1 discharges the combustion exhaust gas G₁₁₋₁ generated by the power generation to an exhaust gas line (first exhaust gas flow path) L₁₁₋₁. The exhaust gas line L₁₁₋₁ is provided with the waste heat recovery boiler 11-1, the stack 15-1, and a flow rate control valve V₁₁₋₁ in this order. The flow rate control valve V₁₁₋₁ adjusts a flow rate of the combustion exhaust gas G₁₁₋₁ flowing through the exhaust gas line L₁₁₋₁. The waste heat recovery boiler 11-1 recovers the waste heat of the combustion exhaust gas G₁₁₋₁ that is discharged from the power generation facility 10-1 and flows through the exhaust gas line L₁₁₋₁, and supplies the combustion exhaust gas G₁₁₋₁ from which the waste heat has been recovered to the stack 15-1. The stack 15-1 discharges a part of the combustion exhaust gas G₁₁₋₁ to outside as needed, and supplies the combustion exhaust gas G₁₁₋₁ to the integrated waste heat recovery boiler 12.

The power generation facility 10-2 discharges the combustion exhaust gas G₁₁₋₂ generated by the power generation to an exhaust gas line (second exhaust gas flow path) L₁₁₋₂. The exhaust gas line L₁₁₋₂ is provided with a flow rate control valve V₁₁₋₂. The flow rate control valve V₁₁₋₂ adjusts a flow rate of the combustion exhaust gas G₁₁₋₂ flowing through the exhaust gas line L₁₁₋₂.

The integrated waste heat recovery boiler 12 is supplied with the integrated combustion exhaust gas G₂₁ in which the combustion exhaust gas G₁₁₋₁ flowing through the exhaust gas line L₁₁₋₁ and the combustion exhaust gas G₁₁₋₂ flowing through the exhaust gas line L₁₁₋₂ are integrated. The integrated waste heat recovery boiler 12 is provided with the nitrogen oxide removal unit 120 that reduces and removes nitrogen oxide such as nitrogen monoxide and nitrogen dioxide contained in the integrated combustion exhaust gas G₂₁.

The exhaust gas treatment device 4 includes the control unit 18 that controls opening amounts of the flow rate control valve V₁₁₋₁ and flow rate control valve V₁₁₋₂, and the supply amount of the fuel supplied to the power generation facility 10, based on the gas flow rate and temperature of the integrated combustion exhaust gas G₂₁ measured by the first exhaust gas measurement unit 16. The control unit 18 adjusts the opening amounts of the flow rate control valve V₁₁₋₁ and flow rate control valve V₁₁₋₂, and the supply amounts of the fuels F supplied to the power generation facilities 10-1 and 10-2 to control such that the temperature of the integrated combustion exhaust gas G₂₁ measured by the first exhaust gas measurement unit 16 is 300°C or higher and 400°C or lower. By such control, the exhaust gas treatment device 4 can make the temperature of the integrated combustion exhaust gas G₂₁ supplied to the nitrogen oxide removal unit 120 in the integrated waste heat recovery boiler 12 a temperature suitable for decomposing and removing nitrogen oxide, so that nitrogen oxide in the integrated combustion exhaust gas G₂₁ can be further more efficiently decomposed and removed.

In a case where the temperature of the integrated combustion exhaust gas G₂₁ measured by the first exhaust gas measurement unit 16 is lower than 300°C, the control unit 18 controls at least one of the opening amount of the flow rate control valve V₁₁₋₁ to be decreased and the opening amount of the flow rate control valve V₁₁₋₂ to be increased, so that a ratio, in the integrated combustion exhaust gas G₂₁, of the combustion exhaust gas G₁₁₋₂ flowing through the exhaust gas line L₁₁₋₂ is increased with respect to the combustion exhaust gas G₁₁₋₁ flowing through the exhaust gas line L₁₁₋₁. This can increase the ratio of the combustion exhaust gas G₁₁₋₂ relative to the combustion exhaust gas G₁₁₋₁, where the temperature of the combustion exhaust gas G₁₁₋₁ is decreased because the heat thereof has been recovered by the waste heat recovery boiler 11-1, and where the temperature of the combustion exhaust gas G₁₁₋₂ is high because the heat thereof has not been recovered by the waste heat recovery boiler 11-1, and therefore, the temperature of the integrated combustion exhaust gas G₂₁ measured by the first exhaust gas measurement unit 16 increases. The control unit 18 may maintain the opening amounts of the flow rate control valve V₁₁₋₁ and flow rate control valve V₁₁₋₂ to increase the supply amount of the fuel supplied to the power generation facility 10 so as to increase the temperature of the integrated combustion exhaust gas G₂₁.

In a case where the temperature of the integrated combustion exhaust gas G₂₁ measured by the first exhaust gas measurement unit 16 exceeds 400°C, the control unit 18 controls at least one of the opening amount of the flow rate control valve V₁₁₋₁ to be increased and the opening amount of the flow rate control valve V₁₁₋₂ to be decreased, so that the ratio, in the integrated combustion exhaust gas G₂₁, of the combustion exhaust gas G₁₁₋₂ flowing through the exhaust gas line L₁₁₋₂ is decreased with respect to the combustion exhaust gas G₁₁₋₁ flowing through the exhaust gas line L₁₁₋₁. This can decrease the ratio of the combustion exhaust gas G₁₁₋₂ relative to the combustion exhaust gas G₁₁₋₁, where the temperature of the combustion exhaust gas G₁₁₋₁ is decreased because the heat thereof has been recovered by the waste heat recovery boiler 11-1, and where the temperature of the combustion exhaust gas G₁₁₋₂ is high because the heat thereof has not been recovered by the waste heat recovery boiler 11-1, and therefore, the temperature of the integrated combustion exhaust gas G₂₁ measured by the first exhaust gas measurement unit 16 decreases. The control unit 18 may maintain the opening amounts of the flow rate control valve V₁₁₋₁ and flow rate control valve V₁₁₋₂ to decrease the supply amount of the fuel supplied to the power generation facility 10 so as to decrease the temperature of the integrated combustion exhaust gas G₂₁. For the other components, descriptions are omitted since the other components are the same as those of the exhaust gas treatment device 1 illustrated in FIG. 1.

Next, the overall operation of the exhaust gas treatment device 4 according to the present embodiment will be described. The combustion exhaust gas G₁₁₋₁ discharged from the power generation facility 10-1, with the waste heat of the gas G₁₁₋₁ being recovered by the waste heat recovery boiler 11-1 via the exhaust gas line L₁₁₋₁ to decrease the temperature, after a part of the gas G₁₁₋₁ is discharged from the stack 15-1, is supplied to an integrated exhaust gas line L₂₁. The combustion exhaust gas G₁₁₋₂ discharged from the power generation facility 10-2 is supplied via the exhaust gas line L₁₁₋₂ to the integrated exhaust gas line L₂₁. In the integrated exhaust gas line L₂₁, the combustion exhaust gas G₁₁₋₁ and the combustion exhaust gas G₁₁₋₂ are integrated to obtain the integrated combustion exhaust gas G₂₁, where the waste heat of the combustion exhaust gas G₁₁₋₁ is recovered by the waste heat recovery boiler 11-1 to decrease the temperature thereof and the combustion exhaust gas G₁₁₋₂ has a temperature higher relative to the combustion exhaust gas G₁₁₋₁, and the resultant integrated combustion exhaust gas G₂₁ is supplied to the integrated waste heat recovery boiler 12. Here, the control unit 18 controls the opening amounts of the flow rate control valves V₁₁₋₁ and V₁₁₋₂ and the supply amount of the fuel F supplied to the power generation facility 10 as needed, such that the temperature of the integrated combustion exhaust gas G₂₁ is a predetermined temperature (for example, 300°C or higher and 400°C or lower). The integrated combustion exhaust gas G₂₁ supplied to the integrated waste heat recovery boiler 12 is supplied with the reducing agent by the reducing agent supply unit 121 in the nitrogen oxide removal unit 120, and, after nitrogen oxide is decomposed and removed by selective catalytic reduction unit 122, is supplied to the CO₂ recovery unit 13. Here, the control unit 18 controls an amount of the reducing agent supplied from the reducing agent supply unit 121 to the integrated combustion exhaust gas G₂₁ as needed, such that nitrogen oxide in the integrated combustion exhaust gas G₂₁ supplied to the CO₂ recovery unit 13 is a predetermined value or less. The integrated combustion exhaust gas G₂₁ supplied to the CO₂ recovery unit 13, after CO₂ is recovered by the CO₂ absorbing liquid, is discharged out of the exhaust gas treatment device 4. CO₂ in the integrated combustion exhaust gas G₂₁ recovered by the CO₂ absorbing liquid is heated to be released from the CO₂ absorbing liquid, and thereafter, supplied to the CO₂ compression portion 14, and compressed and discharged.

As described above, according to the above-described embodiment, the waste heat of the combustion exhaust gas G₁₁₋₁ discharged from the power generation facility 10-1 is recovered by the waste heat recovery boiler 11-1 provided to the exhaust gas line L₁₁₋₁, while the combustion exhaust gas G₁₁₋₁ after the waste heat is recovered is integrated with the combustion exhaust gas G₁₁₋₂ discharged from the power generation facility 10-2 and flowing through the exhaust gas line L₁₁₋₂ in a state of high temperature that the temperature is higher than the combustion exhaust gas G₁₁₋₁, and then, the integrated combustion exhaust gas G₂₁ is resulted. This can adjust the temperature of the integrated combustion exhaust gas G₂₁ introduced into the integrated waste heat recovery boiler 12 to a range suitable for decomposing and removing nitrogen oxide, such that nitrogen oxide in the combustion exhaust gases G₁₁₋₁ and G₁₁₋₂ discharged from the power generation facility 10 can be efficiently removed. Since the exhaust gas line L₁₁₋₂ that is one of the exhaust gas lines L₁₁₋₁ and L₁₁₋₂ does not need to be provided with the nitrogen oxide removal unit 120, the increase in the facility cost can be also reduced. Therefore, the exhaust gas treatment device 4 can be achieved in which nitrogen oxide can be efficiently removed and the increase in the facility cost can be reduced.

The embodiment described above describes the configuration in which the waste heat recovery boiler 11-1 is provided to the exhaust gas line L₁₁₋₁, but the waste heat recovery boiler 11-1 may be configured to be provided to the exhaust gas line L₁₁₋₂, or the waste heat recovery boiler 11-1 may be configured to be provided to both the exhaust gas line L₁₁₋₁ and the exhaust gas line L₁₁₋₂. In a case where waste heat recovery boiler 11-1 is provided to both the exhaust gas line L₁₁₋₁ and the exhaust gas line L₁₁₋₂, the integrated combustion exhaust gas G₂₁ can be adjusted to a desired temperature by differentiating a recovery amount of the waste heat from the combustion exhaust gas G₁₁₋₁ in the waste heat recovery boiler 11-1 on the exhaust gas line L₁₁₋₁ from a recovery amount of the waste heat from the combustion exhaust gas G₁₁₋₂ in the waste heat recovery boiler 11 on the exhaust gas line L₁₁₋₂. Each of two power generation facilities 10-1 and 10-2 may be an existing power generation facility, or a newly built power generation facility. For example, in a case where the power generation facility 10-1 is an existing power generation facility, the integrated combustion exhaust gas G₂₁ can be adjusted to a desired temperature only by newly providing the power generation facility 10-2 and the exhaust gas line L₁₁₋₂. The configuration of the integrated waste heat recovery boiler 12 may be the same as the configuration illustrated in FIG. 3 or FIG. 4.

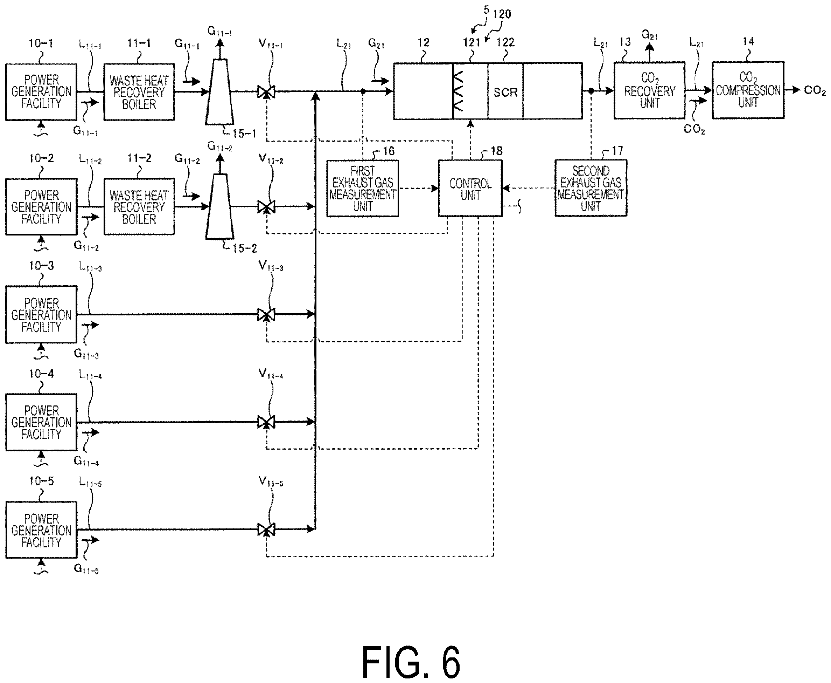

FIG. 6 is a schematic view illustrating another example of the exhaust gas treatment device 4 according to the second embodiment of the present invention. As illustrated in FIG. 6, an exhaust gas treatment device 5 according to the present embodiment recovers waste heat of combustion exhaust gases G₁₁₋₁, G₁₁₋₂, G₁₁₋₃, G₁₁₋₄, and G₁₁₋₅ respectively discharged from five power generation facilities 10-1, 10-2, 10-3, 10-4, and 10-5 by the integrated waste heat recovery boiler 12, and thereafter, recovers CO₂ contained in the combustion exhaust gases G₁₁₋₁, G₁₁₋₂, G₁₁₋₃, G₁₁₋₄, and G₁₁₋₅ by the CO₂ recovery unit 13. The exhaust gas treatment device 5 includes the power generation facility (first power generation facility) 10-1 discharging the combustion exhaust gas (first combustion exhaust gas) G₁₁₋₁, the power generation facility (first power generation facility) 10-2 discharging the combustion exhaust gas (first combustion exhaust gas) G₁₁₋₂, the power generation facility (second power generation facility) 10-3 discharging the combustion exhaust gas (second combustion exhaust gas) G₁₁₋₃, the power generation facility (second power generation facility) 10-4 discharging the combustion exhaust gas (second combustion exhaust gas) G₁₁₋₄, the power generation facility (second power generation facility) 10-5 discharging the combustion exhaust gas (second combustion exhaust gas) G₁₁₋₅, the waste heat recovery boiler 11-1 provided on a downstream stage of the power generation facility 10-1 in a flow direction of the combustion exhaust gas G₁₁₋₁, a waste heat recovery boiler 11-2 provided on a downstream stage of the power generation facility 10-2 in a flow direction of the combustion exhaust gas G₁₁₋₂, the integrated waste heat recovery boiler 12 provided on a downstream stage of the waste heat recovery boiler 11-1, the CO₂ recovery unit 13 provided on a downstream stage of the integrated waste heat recovery boiler 12, and the CO₂ compression portion 14 provided on a downstream stage of the CO₂ recovery unit 13. The stack 15-1 discharging a part of the combustion exhaust gas G₁₁₋₁ is provided between the waste heat recovery boiler 11-1 and the integrated waste heat recovery boiler 12, and a stack 15-2 discharging a part of the combustion exhaust gas G₁₁₋₂ is provided between the waste heat recovery boiler 11-2 and the integrated waste heat recovery boiler 12.

The power generation facilities 10-1 and 10-2 discharge the combustion exhaust gases G₁₁₋₁ and G₁₁₋₂ generated by the power generation to the exhaust gas lines (first exhaust gas flow path) L₁₁₋₁ and L₁₁₋₂.

The exhaust gas lines L₁₁₋₁ and L₁₁₋₂ are provided with respectively the waste heat recovery boilers 11-1 and 11-2, the stacks 15-1 and 15-2, and the flow rate control valves V₁₁₋₁ and V₁₁₋₂ in this order. The flow rate control valves V₁₁₋₁ and V₁₁₋₂ adjust flow rates of the combustion exhaust gases G₁₁₋₁ and G₁₁₋₂ flowing through the exhaust gases lines L₁₁₋₁ and L₁₁₋₂, respectively. The waste heat recovery boilers 11-1 and 11-2 recover the waste heat of the combustion exhaust gases G₁₁₋₁ and G₁₁₋₂ that are discharged from the power generation facilities 10-1 and 10-2 and flow through the exhaust gas lines L₁₁₋₁ and L₁₁₋₂, and supply the combustion exhaust gases G₁₁₋₁ and G₁₁₋₂ from which the waste heat has been recovered to the stacks 15-1 and 15-2, respectively. The stacks 15-1 and 15-2 supply the combustion exhaust gases G₁₁₋₁ and G₁₁₋₂ to the integrated waste heat recovery boiler 12, and discharge a part of the combustion exhaust gases G₁₁₋₁ and G₁₁₋₂ to outside as needed.

The power generation facilities 10-3, 10-4, and 10-5 discharge the combustion exhaust gases G₁₁₋₃, G₁₁₋₄ and G₁₁₋₅ generated by the power generation to the exhaust gas lines (second exhaust gas flow path) L₁₁₋₃, L₁₁₋₄ and L₁₁₋₅, respectively. The exhaust gas lines L₁₁₋₃, L₁₁₋₄ and L₁₁₋₅ are provided with flow rate control valves V₁₁₋₃, V₁₁₋₄, and V₁₁₋₅, respectively.

The flow rate control valves V₁₁₋₃, V₁₁₋₄, and V₁₁₋₅ adjust flow rates of the combustion exhaust gases G₁₁₋₃, G₁₁₋₄, and G₁₁₋₅ flowing through the exhaust gases lines L₁₁₋₃, L₁₁₋₄ and L₁₁₋₅, respectively.

The integrated waste heat recovery boiler 12 is supplied with the integrated combustion exhaust gas G₂₁ in which the combustion exhaust gases G₁₁₋₁, G₁₁₋₂, G₁₁₋₃, G₁₁₋₄, and G₁₁₋₅ flowing through the exhaust gas lines L₁₁₋₁, L₁₁₋₂, L₁₁₋₃, L₁₁₋₄, and L₁₁₋₅ are integrated. The integrated waste heat recovery boiler 12 is provided with, within thereof, the nitrogen oxide removal unit 120 that reduces and removes nitrogen oxide such as nitrogen monoxide and nitrogen dioxide contained in the integrated combustion exhaust gas G₂₁.

The exhaust gas treatment device 5 includes the control unit 18 that controls opening amounts of the flow rate control valves V₁₁₋₁, V₁₁₋₂, V₁₁₋₃, V₁₁₋₄, and V₁₁₋₅ and supply amounts of the fuels F supplied to the power generation facilities 10-1, 10-2, 10-3, 10-4, and 10-5, based on the gas flow rate and temperature of the integrated combustion exhaust gas G₂₁ measured by the first exhaust gas measurement unit 16. The control unit 18 adjusts respectively the opening amounts of the flow rate control valves V₁₁₋₁, V₁₁₋₂, V₁₁₋₃, V₁₁₋₄, and V₁₁₋₅, and the supply amounts of the fuels F supplied to the power generation facilities 10-1, 10-2, 10-3, 10-4, and 10-5 to control such that the temperature of the integrated combustion exhaust gas G₂₁ measured by the first exhaust gas measurement unit 16 is 300°C or higher and 400°C or lower. By such control, the exhaust gas treatment device 5 can make the temperature of the integrated combustion exhaust gas G₂₁ supplied to the nitrogen oxide removal unit 120 in the integrated waste heat recovery boiler 12 a temperature suitable for decomposing and removing nitrogen oxide, so that nitrogen oxide in the integrated combustion exhaust gas G₂₁ can be further more efficiently decomposed and removed.

In a case where the temperature of the integrated combustion exhaust gas G₂₁ measured by the first exhaust gas measurement unit 16 is lower than 300°C, the control unit 18 controls at least one of the opening amounts of the flow rate control valves V₁₁₋₁ and V₁₁₋₂ to be decreased and the opening amounts of the flow rate control valves V₁₁₋₃, V₁₁₋₄, and V₁₁₋₅ to be increased, so that a ratio, in the integrated combustion exhaust gas G₂₁, of the combustion exhaust gases G₁₁₋₃, G₁₁₋₄, and G₁₁₋₅ flowing through the exhaust gas lines L₁₁₋₃, L₁₁₋₄, and L₁₁₋₅ is increased with respect to the combustion exhaust gases G₁₁₋₁ and G₁₁₋₂ flowing through the exhaust gas lines L₁₁₋₁ and L₁₁₋₂.This can increase the ratio of the combustion exhaust gases G₁₁₋₃, G₁₁₋₄, and G₁₁₋₅ relative to the combustion exhaust gases G₁₁₋₁ and G₁₁₋₂, where the temperatures of the combustion exhaust gases G₁₁₋₁ and G₁₁₋₂ are decreased because the heats thereof have been recovered by the waste heat recovery boilers 11-1 and 11-2, and where the temperatures of the combustion exhaust gases G₁₁₋₃, G₁₁₋₄, and G₁₁₋₅ are high because the heats thereof have not been recovered by the waste heat recovery boilers 11-1 and 11-2, and therefore, the temperature of the integrated combustion exhaust gas G₂₁ measured by the first exhaust gas measurement unit 16 increases. The control unit 18 may maintain the opening amounts of the flow rate control valves V₁₁₋₁, V₁₁₋₂, V₁₁₋₃, V₁₁₋₄, and V₁₁₋₅ to increase the supply amounts of the fuels F supplied to the power generation facilities 10-1, 10-2, 10-3, 10-4, and 10-5 so as to increase the temperature of the integrated combustion exhaust gas G₂₁.

In a case where the temperature of the integrated combustion exhaust gas G₂₁ measured by the first exhaust gas measurement unit 16 exceeds 400°C, the control unit 18 controls at least one of the opening amounts of the flow rate control valves V₁₁₋₁ and V₁₁₋₂ to be increased and the opening amounts of the flow rate control valves V₁₁₋₃, V₁₁₋₄, and V₁₁₋₅ to be decreased, so that the ratio, in the integrated combustion exhaust gas G₂₁, of the combustion exhaust gases G₁₁₋₃, G₁₁₋₄, and G₁₁₋₅ flowing through the exhaust gas lines L₁₁₋₃, L₁₁₋₄, and L₁₁₋₅ is decreased with respect to the combustion exhaust gas G₁₁₋₁ and G₁₁₋₂ flowing through the exhaust gas lines L₁₁₋₁ and L₁₁₋₂. This can decrease the ratio of the combustion exhaust gases G₁₁₋₃, G₁₁₋₄, and G₁₁₋₅ relative to the combustion exhaust gases G₁₁₋₁ and G₁₁₋₂, where the temperatures of the combustion exhaust gases G₁₁₋₁ and G₁₁₋₂ are decreased because the heats thereof have been recovered by the waste heat recovery boilers 11-1 and 11-2, and where the temperatures of the combustion exhaust gases G₁₁₋₃, G₁₁₋₄, and G₁₁₋₅ are high because the heats thereof have not been recovered by the waste heat recovery boilers 11-1 and 11-2, and therefore, the temperature of the integrated combustion exhaust gas G₂₁ measured by the first exhaust gas measurement unit 16 decreases. The control unit 18 may maintain the opening amounts of the flow rate control valves V₁₁₋₁, V₁₁₋₂, V₁₁₋₃, V₁₁₋₄, and V₁₁₋₅ to decrease the supply amount of the fuel supplied to the power generation facility 10 so as to decrease the temperature of the integrated combustion exhaust gas G₂₁. For the other components, descriptions are omitted since the other components are the same as those of the exhaust gas treatment device 1 illustrated in FIG. 1.

Next, the overall operation of the exhaust gas treatment device 5 according to the present embodiment will be described. The combustion exhaust gases G₁₁₋₁ and G₁₁₋₂ discharged from the power generation facilities 10-1 and 10-2, with the waste heat of the gases G₁₁₋₁ and G₁₁₋₂ being recovered by the waste heat recovery boilers 11-1 and 11-2 via the exhaust gas lines L₁₁₋₁ and L₁₁₋₂ to decrease the temperatures, after a part of the gases G₁₁₋₁ and G₁₁₋₂ is discharged from the stacks 15-1 and 15-2, are supplied to an integrated exhaust gas line L₂₁. The combustion exhaust gases G₁₁₋₃, G₁₁₋₄, and G₁₁₋₅ discharged from the power generation facilities 10-3, 10-4, and 10-5 are supplied via the exhaust gas lines L₁₁₋₃, L₁₁₋₄, and L₁₁₋₅ to the integrated exhaust gas line L₂₁. In the integrated exhaust gas line L₂₁, the combustion exhaust gases G₁₁₋₁ and G₁₁₋₂ and the combustion exhaust gases G₁₁₋₃, G₁₁₋₄, and G₁₁₋₅ are integrated to obtain the integrated combustion exhaust gas G₂₁, where the waste heat of the combustion exhaust gases G₁₁₋₁ and G₁₁₋₂ is recovered by the waste heat recovery boilers 11-1 and 11-2 to decrease the temperatures thereof and the combustion exhaust gases G₁₁₋₃, G₁₁₋₄, and G₁₁₋₅ have temperatures higher relative to the combustion exhaust gases G₁₁₋₁ and G₁₁₋₂, and the resultant integrated combustion exhaust gas G₂₁ is supplied to the integrated waste heat recovery boiler 12. Here, the control unit 18 controls the opening amounts of the flow rate control valves V₁₁₋₁ and V₁₁₋₂ and the supply amount of the fuel supplied to the power generation facility 10 as needed, such that the temperature of the integrated combustion exhaust gas G₂₁ is a predetermined temperature (for example, 300°C or higher and 400°C or lower). The integrated combustion exhaust gas G₂₁ supplied to the integrated waste heat recovery boiler 12 is supplied with the reducing agent by the reducing agent supply unit 121 in the nitrogen oxide removal unit 120, and, after nitrogen oxide is decomposed and removed by selective catalytic reduction unit 122, is supplied to the CO₂ recovery unit 13. Here, the control unit 18 controls an amount of the reducing agent supplied from the reducing agent supply unit 121 to the integrated combustion exhaust gas G₂₁ as needed, such that nitrogen oxide in the integrated combustion exhaust gas G₂₁ supplied to the CO₂ recovery unit 13 is a predetermined value or less. The integrated combustion exhaust gas G₂₁ supplied to the CO₂ recovery unit 13, after CO₂ is recovered by the CO₂ absorbing liquid, is discharged out of the exhaust gas treatment device 5. CO₂ in the integrated combustion exhaust gas G₂₁ recovered by the CO₂ absorbing liquid is heated to be released from the CO₂ absorbing liquid, and thereafter, supplied to the CO₂ compression portion 14, and compressed and discharged.

As described above, according to the above-described embodiment, the waste heat of the combustion exhaust gases G₁₁₋₁ and G₁₁₋₂ discharged from the power generation facilities 10-1 and 10-2 is recovered by the waste heat recovery boilers 11-1 and 11-2 provided to the exhaust gas lines L₁₁₋₁ and L₁₁₋₂, while the combustion exhaust gases G₁₁₋₁ and G₁₁₋₂ after the waste heat is recovered are integrated with the combustion exhaust gas G₁₁₋₂ discharged from the power generation facilities 10-3, 10-4, and 10-5 and flowing through the exhaust gas lines L₁₁₋₃, L₁₁₋₄, and L₁₁₋₅ in a state of high temperature that the temperature is higher than the combustion exhaust gases G₁₁₋₁ and G₁₁₋₂, and then, the integrated combustion exhaust gas G₂₁ is resulted. This can adjust the temperature of the integrated combustion exhaust gas G₂₁ introduced into the integrated waste heat recovery boiler 12 to a range suitable for decomposing and removing nitrogen oxide, such that nitrogen oxide in the combustion exhaust gas discharged from the power generation facility 10 can be efficiently removed. Since at least one exhaust gas line (three exhaust gas lines L₁₁₋₃, L₁₁₋₄, and L₁₁₋₅ in the present embodiment) of the exhaust gas lines L₁₁₋₁, L₁₁₋₂, L₁₁₋₃, L₁₁₋₄, and L₁₁₋₅ do not need to be provided with the nitrogen oxide removal unit 120, the increase in the facility cost can be also reduced. Therefore, the exhaust gas treatment device 5 can be achieved in which nitrogen oxide can be efficiently removed and the increase in the facility cost can be reduced.

The embodiment described above describes the configuration in which the waste heat recovery boilers 11-1 and 11-2 are provided to the exhaust gas lines L₁₁₋₁ and L₁₁₋₂, but the waste heat recovery boiler 11 may be configured to be provided to at least one exhaust gas line L₁₁, or the waste heat recovery boiler 11 may be configured to be provided to all of the exhaust gas lines L₁₁₋₁, L₁₁₋₂, L₁₁₋₃, L₁₁₋₄, and L₁₁₋₅. In this case, the integrated combustion exhaust gas G₂₁ can be adjusted to a desired temperature by differentiating recovery amounts of the waste heat from the combustion exhaust gases G₁₁₋₁, G₁₁₋₂, G₁₁₋₃, G₁₁₋₄, and G₁₁₋₅ in the waste heat recovery boiler 11 on the exhaust gas lines L₁₁₋₁, L11-2, L₁₁₋₃, L₁₁₋₄, and L₁₁₋₅. Each of the power generation facilities 10-1, 10-2, 10-3, 10-4, and 10-5 may be an existing power generation facility, or a newly built power generation facility. The configuration of the integrated waste heat recovery boiler 12 may be the same as the configuration illustrated in FIG. 3 or FIG. 4.

### Example

The present inventors investigated in detail effects to reduce the accumulation amount of the nitrogen oxide (NO₂)-derived component in the CO₂ absorbing liquid in the exhaust gas treatment device according to the above-described embodiment. Hereinafter, content investigated by the present inventor will be described.

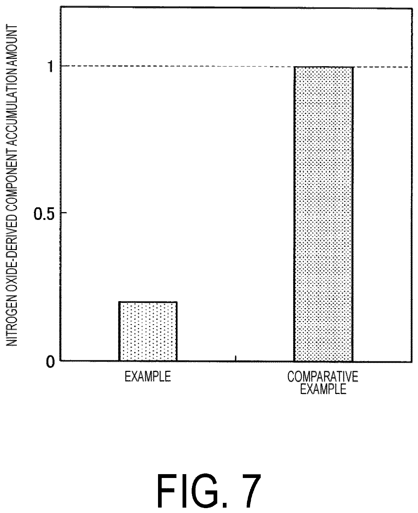

FIG. 7 is an explanatory diagram illustrating an accumulation amount of a nitrogen oxide-derived component in a CO₂ absorbing liquid in the exhaust gas treatment device according to an example and a comparative example. FIG. 7 illustrates a comparison, in the exhaust gas treatment device according to the above-described embodiment, between the accumulation amount of the nitrogen oxide-derived component in a case where an exhaust gas temperature of the integrated combustion exhaust gas G₂₁ introduced into the nitrogen oxide removal unit 120 was made to be in a range of 300°C or higher and 400°C or lower (refer to the working example), and the accumulation amount of the nitrogen oxide-derived component in a case where an exhaust gas temperature of the combustion exhaust gas introduced into the nitrogen oxide removal unit 120 was made to be 250°C (refer to the comparative example). As illustrated in FIG. 7, by adjusting the exhaust gas temperature of the integrated combustion exhaust gas G₂₁ to the range of 300°C or greater and 400°C or lower, the accumulation amount of the nitrogen oxide-derived component in the CO₂ absorbing liquid can be reduced to 0.2 times and a reclaiming frequency of the CO₂ absorbing liquid can be reduced to about one-fifth as compared with the case that the exhaust gas temperature the combustion exhaust gas is made to be 250°C. From this result, according to the exhaust gas treatment device of the above-described embodiment, it can be seen that the nitrogen oxide accumulated in the CO₂ absorbing liquid can be extremely reduced, and an operation cost of the exhaust gas treatment device can be reduced.

### Reference Signs List

- 1, 2, 3, 4, 5: Exhaust gas treatment device
- 10, 10-1, 10-2, 10-3, 10-4, 10-5: Power generation facility
- 11: Waste heat recovery boiler
- 12: Integrated waste heat recovery boiler
- 13: CO₂ recovery unit
- 14: CO₂ compression portion
- 15: Stack
- 16: First exhaust gas measurement unit
- 17: Second exhaust gas measurement unit
- 18: Control unit
- 19: Low-pressure steam turbine
- 20: Mid-pressure/high-pressure steam turbine
- 210: Gas turbine
- 211: Compressor
- 212: Combustor
- 213: Turbine
- 221: Low-pressure steam turbine
- 222: Mid-pressure/high-pressure steam turbine
- 222A: Mid-pressure steam turbine
- 222B: High-pressure steam turbine
- 230: Generator
- 240: Turbine
- A: Air
- F: Fuel
- G₁₁, G₁₁₋₁, G₁₁₋₂, G₁₁₋₃, G₁₁₋₄, G₁₁₋₅: Combustion exhaust gas
- G₂₁: Integrated combustion exhaust gas
- L₁₁, L₁₁₋₁, L₁₁₋₂, L₁₁₋₃, L₁₁₋₄, L₁₁₋₅: Exhaust gas line
- L_{11A}: Main exhaust gas line
- L_{11B}: Branch exhaust gas line
- L₂₁: Integrated exhaust gas line
- V_{11A}, V_{11B}, V₁₁₋₁, V₁₁₋₂, V₁₁₋₃, V₁₁₋₄, V₁₁₋₅: Flow rate control valve

## Claims

1. An exhaust gas treatment device comprising:
a first exhaust gas flow path through which a first combustion exhaust gas discharged from a power generation facility flows;
a waste heat recovery unit provided to the first exhaust gas flow path and recovers waste heat of the first combustion exhaust gas;
a second exhaust gas flow path branched from the first exhaust gas flow path and provided between a front stage and downstream stage of the waste heat recovery unit on the first exhaust gas flow path, in which at least a part of the first combustion exhaust gas flowing through the first exhaust gas flow path flows, as a second combustion exhaust gas, through the second exhaust gas flow path;
a nitrogen oxide removal unit configured to remove nitrogen oxide in an integrated combustion exhaust gas into which the first combustion exhaust gas and the second combustion exhaust gas are integrated, the first combustion exhaust gas flowing through the first exhaust gas flow path with the waste heat of the first combustion exhaust gas having been recovered by the waste heat recovery unit, and the second combustion exhaust gas flowing through the second exhaust gas flow path with a temperature of the second combustion exhaust gas being higher relative to the first combustion exhaust gas;
an integrated waste heat recovery unit configured to recover waste heat of the integrated combustion exhaust gas with the nitrogen oxide having been removed by the nitrogen oxide removal unit; and
a CO₂ recovery unit configured to recover CO₂ in the integrated combustion exhaust gas by a CO₂ absorbing liquid with the waste heat of the integrated combustion exhaust gas having been recovered by the integrated waste heat recovery unit.

2. The exhaust gas treatment device according to claim 1, further comprising:
a control unit that adjusts a flow rate of the first combustion exhaust gas flowing through the first exhaust gas flow path and a flow rate of the second combustion exhaust gas flowing through the second exhaust gas flow path to control such that a temperature of the integrated combustion exhaust gas introduced into the nitrogen oxide removal unit is 300°C or higher and 400°C or lower.

3. An exhaust gas treatment device comprising:
a first exhaust gas flow path through which a first combustion exhaust gas discharged from a first power generation facility flows;
a second exhaust gas flow path through which a second combustion exhaust gas discharged from a second power generation facility flows;
a waste heat recovery unit provided to the first exhaust gas flow path and recovers waste heat of the first combustion exhaust gas;
a nitrogen oxide removal unit configured to remove nitrogen oxide in an integrated combustion exhaust gas into which the first combustion exhaust gas and the second combustion exhaust gas are integrated, the first combustion exhaust gas flowing through the first exhaust gas flow path with the waste heat of the first combustion exhaust gas having been recovered by the waste heat recovery unit, and the second combustion exhaust gas flowing through the second exhaust gas flow path with a temperature of the second combustion exhaust gas being higher relative to the first combustion exhaust gas;
an integrated waste heat recovery unit configured to recover waste heat of the integrated combustion exhaust gas with the nitrogen oxide having been removed by the nitrogen oxide removal unit; and
a CO₂ recovery unit that recovers CO₂ in the integrated combustion exhaust gas by a CO₂ absorbing liquid with the waste heat of the integrated combustion exhaust gas having been recovered by the integrated waste heat recovery unit.

4. The exhaust gas treatment device according to claim 3, further comprising:
a control unit configured to adjust a flow rate of each of the combustion exhaust gases flowing through the first exhaust gas flow path and the second exhaust gas flow path to control such that a temperature of the integrated combustion exhaust gas introduced into the nitrogen oxide removal unit is 300°C or higher and 400°C or lower.

5. The exhaust gas treatment device according to any one of claims 1 to 4, wherein
the nitrogen oxide removal unit is provided within the integrated waste heat recovery unit.

6. The exhaust gas treatment device according to any one of claims 1 to 5, wherein
the nitrogen oxide removal unit includes a reducing agent injection unit configured to inject a nitrogen oxide removal catalyst removing the nitrogen oxide and a reducing agent.

7. The exhaust gas treatment device according to claim 6, further comprising:
a control unit configured to control a supply amount of the reducing agent, based on a gas flow rate and nitrogen oxide concentration of the integrated combustion exhaust gas introduced into the CO₂ recovery unit.

8. The exhaust gas treatment device according to any one of claims 1 to 7, wherein
the integrated waste heat recovery unit generates a CO₂ compression portion-driving steam for compressing CO₂ discharged from the CO₂ recovery unit by using the waste heat of the integrated combustion exhaust gas with the nitrogen oxide having been removed, and supplies the generated CO₂ compression portion-driving steam to a CO₂ compression portion.

9. The exhaust gas treatment device according to any one of claims 1 to 8, wherein
the integrated waste heat recovery unit generates a turbine-driving steam by using the waste heat of the integrated combustion exhaust gas with the nitrogen oxide having been removed, and supplies the generated turbine-driving steam to a steam turbine.

10. The exhaust gas treatment device according to any one of claims 1 to 9, wherein
a heating unit configured to heat the integrated combustion exhaust gas is provided on a front stage of the nitrogen oxide removal unit, the integrated waste heat recovery unit generates the turbine-driving steam by using the waste heat of the integrated combustion exhaust gas heated by the heating unit, and supplies the generated turbine-driving steam to the steam turbine.

11. The exhaust gas treatment device according to claim 9 or 10, further comprising:
a control unit configured to measure the temperature and gas flow rate of the integrated combustion exhaust gas introduced into the nitrogen oxide removal unit, and control at least one of an amount of a fuel supplied to a combustor in the power generation facility and an amount of the steam supplied to the steam turbine, based on the measured temperature and gas flow rate.

12. The exhaust gas treatment device according to any one of claims 1 to 11, wherein
the power generation facility includes an existing power generation facility.

13. A exhaust gas treatment method comprising the steps of:
removing nitrogen oxide in an integrated combustion exhaust gas into which a first combustion exhaust gas and a second combustion exhaust gas are integrated, the first combustion exhaust gas being discharged from a power generation device with waste heat of the first combustion exhaust gas having been recovered by a waste heat recovery unit which is provided to a first exhaust gas flow path, and the second combustion exhaust gas flowing through a second exhaust gas flow path which is provided to be connected between a front stage and a downstream stage of the waste heat recovery unit on the first exhaust gas flow path with a temperature of the second combustion exhaust gas being higher relative to the first combustion exhaust gas from which the waste heat has been recovered by the waste heat recovery unit;
recovering waste heat of the integrated combustion exhaust gas with the nitrogen oxide having been removed; and
recovering CO₂ in the integrated combustion exhaust gas by a CO₂ absorbing liquid, the waste heat of the integrated combustion exhaust gas having been recovered.

14. An exhaust gas treatment method comprising the steps of:
removing nitrogen oxide in an integrated combustion exhaust gas into which a first combustion exhaust gas and a second combustion exhaust gas are integrated, the first combustion exhaust gas being discharged from a first power generation device with waste heat of the first combustion exhaust gas having been recovered by a waste heat recovery unit which is provided to a first exhaust gas flow path, and the second combustion exhaust gas being discharged from a second power generation device and flowing through a second exhaust gas flow path with a temperature of the second combustion exhaust gas being higher relative to the first combustion exhaust gas from which the waste heat has been recovered by the waste heat recovery unit;
removing nitrogen oxide in the integrated combustion exhaust gas into which combustion exhaust gases are integrated, the combustion exhaust gases being discharged and flowing through a plurality of exhaust gas flow paths at least one of which is provided with a waste heat recovery unit that recovers waste heat of the combustion exhaust gas;
recovering waste heat of the integrated combustion exhaust gas with the nitrogen oxide having been removed; and
recovering CO₂ in the integrated combustion exhaust gas by a CO₂ absorbing liquid, the waste heat of the integrated combustion exhaust gas having been recovered.
